# FASCICULE DE BREVET EUROPEEN

(11) **EP 1 499 090 B1**
(45) Date de publication et mention de la délivrance du brevet: **06.12.2006**
(21) Numéro de dépôt: 03291754.4
(22) Date de dépôt: 15.07.2003
(51) Int. Cl.: H04L 29/06, G06Q 10/00, G06F 17/30

(54) **Système et procédé de commande d'une application à partir d'un terminal WAP en mode partagé**
System und Verfahren zum Aufrufen eines Anwendungsprogramms von einem WAP-Endgerät im gemeinsamen Zugriffsverfahren
System and process for launching an application from a WAP terminal in shared mode

(43) Date de publication de la demande: 19.01.2005
(73) Titulaire: FRANCE TELECOM, 75015 Paris (FR)
(72) Inventeur: Guisnet, Bertrand, 92130 Issy Les Moulineaux (FR); Leprince, Laurent, 91190 Gif/Yvette (FR)
(74) Mandataire: Lemoyne, Didier

(56) Documents cités:
- EP-A- 0 874 323
- EP-A- 1 164 765
- WO-A-01/33781
- WO-A-01/86980
- WO-A-02/054264
- US-A- 5 944 791

## Description

La présente invention concerne un système et un procédé de commande d'une application logicielle à partir d'un terminal WAP (Wireless Application Protocol) en mode partagé.

L'invention s'applique plus particulièrement au partage à distance entre au moins un premier terminal WAP, commandant au moins une application logicielle, et au moins un deuxième terminal WAP.

Un terminal dit "WAP" est un terminal équipé d'un navigateur WAP, compatible avec le protocole d'application sans fil, appelé WAP (Wireless Application Protocol, soit protocole d'application sans fil). Ledit protocole WAP est normalisé par l'organisme de normalisation du WAP, soit l'OMA (Open Mobile Alliance).

Un serveur de diffusion de données d'un réseau de communication, par exemple le réseau Internet, fournit des données vers un terminal WAP lorsque celui-ci établit une connexion vers ledit serveur de diffusion de données.

Lors d'une consultation de données par un terminal WAP, l'utilisateur peut commander une application logicielle à partir par exemple d'un lien hypertexte existant dans le contenu des données fournies. A titre d'exemple, en cours de consultation d'une page sur un site Internet, un lien hypertexte commande une application permettant la visualisation d'un fichier vidéo ou l'audition d'un fichier sonore ou bien permettant le téléchargement d'un fichier texte ou image.

Actuellement, l'évolution du travail coopératif en équipes, réparties par exemple sur plusieurs sites géographiques, rend nécessaire le partage de données. Le partage de données permet à plusieurs personnes de collaborer ensemble. Les données à partager peuvent être de nature très diverse, par exemple une page vierge, un document intégrant une image, une photo ou un plan, un site web sur le réseau Internet, un fichier vidéo ou audio, etc...

Les systèmes existants de transmission de données permettent une transmission multipoint en temps réel sous forme de conférence multimédia, soit vocale, soit visuelle, soit écrite, etc... Pour accéder ou bien échanger lesdites données de toute nature, les terminaux doivent être équipés d'une application spécifique aux dites données, ce qui requière une capacité de traitement et une capacité mémoire importantes sur lesdits terminaux. La bande passante nécessaire pour accéder ou échanger lesdites données est également importante.

Par conséquent, lesdits systèmes sont réservés pour des terminaux à grande capacité mémoire et de traitement, terminaux de type ordinateur personnel (ou PC, Personal Computer) ou bien de type assistant personnel numérique (ou PDA, Personal Digital Assistant), raccordés sur des réseaux de télécommunications à large bande passante tels que les réseaux de télécommunications fixes.

Dans le document EP 02 291 486 est présenté le cas du partage à distance de données, adapté aux réseaux cellulaires de communications avec les mobiles, ainsi qu'à des terminaux sans grande capacité mémoire, notamment les terminaux WAP.

Un serveur de partage de données sert d'intermédiaire entre les premier et deuxième terminaux WAP et réalise la gestion du partage à distance de données entre lesdits terminaux WAP. Ledit serveur de partage de données reçoit les requêtes en provenance des utilisateurs, les analyse et les renvoie vers un serveur de diffusion de données après identification desdits utilisateurs. Le serveur de partage de données dialogue avec un serveur de diffusion automatique en mode "push" pour commander la diffusion desdites données.

Le serveur de partage de données reçoit ladite donnée en provenance dudit serveur de diffusion de données, réalise autant de copies de ladite donnée que de deuxièmes terminaux WAP distants et transmet ladite donnée vers lesdits premier et deuxième terminaux WAP pour une consultation simultanée. Le document EP 02 291 486 présente uniquement la visualisation en mode partagé d'au moins une donnée sur lesdits premier et deuxième terminaux WAP.

Le document US 5 944 791 décrit un système permettant de naviguer sur des réseaux tels que le réseau "Web". Si, par exemple, durant une conférence, un ordinateur pilote souhaite présenter une page web particulière, il transmet l'URL correspondant à cette page web vers un site de contrôle pour retrouver ladite page web. Le site de contrôle nettoie la page web correspondante (par exemple élimine les liens hypertext), puis autorise le téléchargement de la page web nettoyée. L'ordinateur pilote peut alors permettre le téléchargement de cette page web nettoyée vers un autre ordinateur. Mais ce document ne mentionne pas le partage de pages WAP. Il ne permet pas le partage d'applications logicielles d'aucune sorte, car le système présenté ne peut les déclencher par aucun moyen.

Aussi, le problème technique à résoudre par l'objet de la présente invention est de proposer un système et un procédé de commande d'au moins une application logicielle à partir d'au moins un premier terminal WAP, visualisant en mode partagé au moins une donnée située dans au moins un réseau de communication, avec au moins un deuxième terminal WAP, le système mettant en oeuvre au moins une fonction de diffusion automatique en mode "push" vers le deuxième terminal (10'), qui permettrait de remédier aux inconvénients des systèmes existants en rendant accessible le partage de ladite application logicielle sur lesdits premier et deuxième terminaux WAP.

L'invention est définie par les revendications indépendantes 1, 7, 9 et 14.

La solution au problème technique posé consiste, selon la présente invention, en ce que ledit système comprend au moins un serveur de partage de données apte à analyser au moins une demande de commande d'application et à transmettre au moins un fichier modifié selon le type d'application, application commandée avec ou sans fichier descripteur, vers lesdits premier et deuxième terminaux WAP pour exécuter ladite application logicielle en mode partagé.

L'invention a également pour objet un procédé de commande d'au moins une application logicielle à partir d'au moins un premier terminal WAP, visualisant en mode partagé au moins une donnée, située dans au moins un réseau de communication, avec au moins un deuxième terminal WAP, le système mettant en oeuvre au moins une fonction de diffusion automatique en mode "push" vers le deuxième terminal (10'), remarquable en ce que ledit procédé comporte les étapes consistant à : transmettre au moins une demande de commande d'application dudit premier terminal WAP vers au moins un serveur de partage de données; analyser le type d'application logicielle par ledit serveur de partage de données, application commandée avec ou sans fichier descripteur ; modifier au moins un fichier et transmettre ledit fichier modifié selon le type d'application logicielle vers lesdits premier et deuxième terminaux WAP; établir une connexion à partir desdits premier et deuxième terminaux WAP vers au moins un serveur d'exécution d'applications.

Le serveur de partage de données sert d'intermédiaire entre lesdits premier et deuxième terminaux WAP et réalise la gestion d'un partage de donnée. Il met en mémoire toutes les informations relatives au partage de ladite donnée.

Lorsque l'utilisateur dudit premier terminal WAP clique par exemple sur un lien hypertexte existant sur ladite donnée partagée, il commande une application logicielle. Sans la gestion par le serveur de partage de données, seul ledit premier terminal WAP exécute ladite application logicielle.

Ledit serveur de partage de données permet l'interactivité sur ladite donnée en mode partagé et l'application logicielle est exécutée sur tous les terminaux distants.

Lorsque le lien hypertexte permet l'accès et la visualisation d'un fichier de contenu, tels qu'un fichier vidéo ou sonore, les différents utilisateurs participants au partage ont tous accès aux même contenus.

Selon un mode de réalisation de l'invention, ledit serveur de partage de données, après analyse du type d'application logicielle, est apte à demander à au moins un serveur (12) de fichiers descripteurs la transmission d'au moins un fichier descripteur de l'application logicielle pour exécuter ladite application logicielle après modification dudit fichier descripteur.

En fonction du type d'application logicielle, celle-ci est identifiée par un fichier descripteur spécifique pour chaque application logicielle.

Le serveur de partage de données modifie ledit fichier descripteur de manière à prendre en compte le passage par ledit serveur de partage de données, qui sert d'intermédiaire avec lesdits premier et deuxième terminaux WAP.

Selon un mode de réalisation de l'invention, ledit serveur de partage de données, pour une application commandée sans fichier descripteur, est apte à transmettre vers ledit premier terminal WAP (10) un fichier de re-direction pour exécuter ladite application logicielle après modification de ladite demande de commande d'application.

Pour d'autres types d'application logicielle, qui sont commandés sans fichier descripteur, ledit serveur de partage de données modifie un fichier de re-direction de manière à exécuter ladite application logicielle.

Conformément à un mode de réalisation de l'invention, ledit système est apte à commander ladite application partagée de façon automatique et uniquement vers lesdits premier et deuxième terminaux participants au mode partagé.

Grâce au serveur de partage de données qui stocke les informations se rapportant au partage de données, la sollicitation des terminaux est réalisée de façon centralisée par ledit serveur de partage. De ce fait, ne sont uniquement sollicités que les terminaux participants audit partage de données mémorisés par le serveur de partage de données.

La diffusion automatique de messages en mode "push" par un serveur WAP permet l'envoie d'un message sans intervention, ni demande du destinataire dudit message. L'application logicielle est donc commandée de façon automatique et uniquement vers lesdits premier et deuxième terminaux WAP.

Selon un mode de réalisation de l'invention, ledit serveur de partage de données commande au moins un serveur (15) de diffusion automatique en mode "push" pour transmettre une page de demande de confirmation vers ledit deuxième terminal WAP pour demander un accord pour l'exécution de ladite application logicielle.

Selon un mode de réalisation de l'invention, ledit serveur de partage de données envoie une page d'attente prédéfinie vers ledit deuxième terminal WAP (10') dans le cas de non-confirmation pour l'exécution de ladite application logicielle.

Dans le cas où l'application logicielle correspondrait par exemple à un service privé ou payant, le serveur de partage de données peut commander l'envoi d'une page de demande de confirmation pour que l'utilisateur puisse donner son accord avant l'exécution de l'application logicielle.

Lors de la réception d'un refus de commande de ladite application logicielle par un terminal sollicité, le serveur de partage de données peut commander la transmission d'une page d'attente prédéfinie vers ledit terminal qui n'a pas confirmé l'exécution de ladite application logicielle.

Conformément à un mode de réalisation de l'invention, ledit serveur de partage de données vérifie la compatibilité desdits premier et deuxième terminaux WAP avec l'exécution de ladite application logicielle partagée.

Conformément à un mode de réalisation de l'invention, ledit serveur de partage de données commande ledit serveur (15) de diffusion automatique en mode "push" vers ledit deuxième terminal WAP (10') pour transmettre une page d'attente prédéfinie en cas de non-compatibilité avec l'exécution de l'application logicielle.

Du fait du partage de données avec plusieurs terminaux distants, certains terminaux peuvent ne pas être compatibles avec l'exécution de ladite application logicielle.

Comme ledit serveur de partage de données a mémorisé toutes les informations relatives au partage de données, il vérifie les capacités et les caractéristiques des différents terminaux participants audit partage de données et à l'exécution de ladite application logicielle.

Lorsqu'un terminal n'a pas la possibilité d'accéder à l'application commandée, le serveur de partage de données peut commander la transmission d'une page d'attente prédéfinie.

Par conséquent, l'invention permet la commande d'une application logicielle à distance entre des terminaux WAP de différente nature, indifféremment fixes ou mobiles.

La description qui va suivre en regard du dessin annexé, donné à titre d'exemple non limitatif, fera bien comprendre en quoi consiste l'invention, comment elle peut être réalisée et d'autres caractéristiques de l'invention en ressortiront.

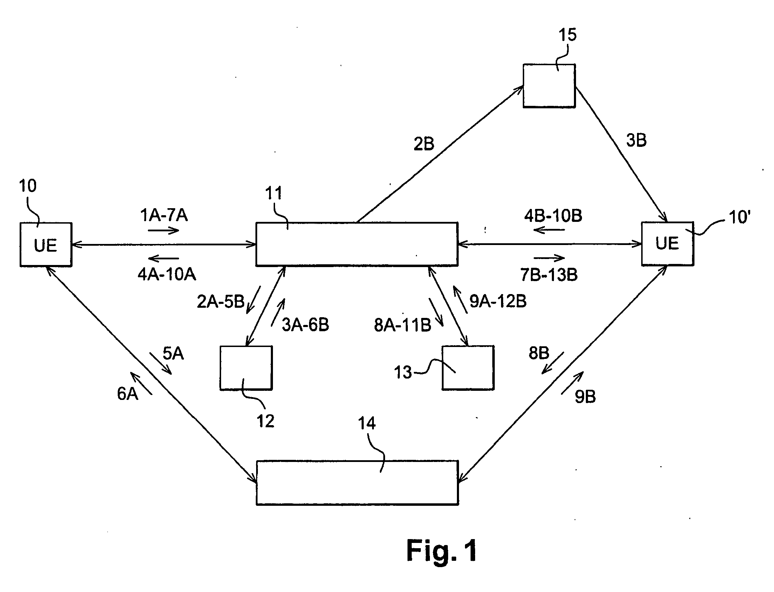

La figure 1 est un schéma illustrant un système et un procédé de commande d'une application logicielle conforme à l'invention.

L'utilisateur d'un premier terminal WAP 10 est déjà en communication à distance avec l'utilisateur d'un deuxième terminal WAP 10'. La communication peut également être établie à distance avec plusieurs interlocuteurs, en plus desdits premier et deuxième terminaux WAP 10, 10'.

L'objet de l'invention s'applique à tout type de terminal équipé d'un navigateur WAP, compatible avec le protocole d'application sans fil, appelé WAP (Wireless Application Protocol, soit protocole d'application sans fil), que ledit terminal 10, 10' soit un terminal fixe ou mobile, appelé UE (User Equipment) sur la figure 1.

Ladite communication entre les différents interlocuteurs distants peut être une communication vocale ou bien une vidéocommunication, établie par l'intermédiaire d'un réseau filaire de télécommunications fixes ou bien par l'intermédiaire d'un réseau cellulaire de télécommunications pour les mobiles.

Ladite communication entre les différents interlocuteurs distants peut également être une communication écrite, de manière à permettre un échange en temps réel ou en quasi-temps réel. Ladite communication écrite est, par exemple, une communication par une messagerie électronique ou bien par une messagerie instantanée de type "chat" ou "instant messaging".

En plus de ladite communication déjà établie, l'utilisateur dudit premier terminal WAP 10 partage une donnée avec au moins un deuxième terminal WAP 10'. Ce partage de données est mis en oeuvre tel que décrit dans le document EP 02 291 486.

Pour ce faire, l'utilisateur dudit premier terminal WAP 10 a ouvert un navigateur WAP, qui lui a permis d'interroger un serveur 13 de diffusion de données pour recevoir une donnée, que l'utilisateur souhaite partager.

Le serveur 13 de diffusion de données est situé dans tout type de réseau de communication, par exemple le réseau Internet ou un réseau intranet privé de communication d'entreprise, qui comprend au moins un serveur de diffusion de données.

La connexion entre ledit premier terminal WAP 10 et le serveur 13 de diffusion de données est établie par l'intermédiaire dudit réseau de télécommunications, indifféremment fixes ou cellulaires, auquel est raccordé ledit premier terminal WAP 10.

Le serveur 13 de diffusion de données a transféré ladite donnée vers ledit premier terminal WAP 10. Ladite donnée transférée est de toute nature, par exemple une page au format WML (Wireless Markup Language, soit langage à balisage pour sans fil), un contenu au format XML (eXtensible Markup Language, soit langage à balisage évolué), une image au format flash ou bien tout autre format de données.

L'utilisateur dudit premier terminal WAP 10 a actionné une demande de partage de ladite donnée visualisée. Ladite demande de partage de données, en provenance dudit premier terminal WAP 10, a été transmise et stockée dans un serveur 11 de partage de données, en indiquant vers quel deuxième terminal WAP 10' se fait le partage. Ladite donnée peut également être partagée avec plusieurs interlocuteurs distants, en plus desdits premier et deuxième terminaux WAP 10, 10'.

Le serveur 11 de partage de données a reçu ladite donnée à partager en provenance du serveur 13 de diffusion de données.

Le serveur 11 de partage de données a commandé une demande de chargement automatique de données vers au moins un serveur 15 de diffusion automatique en mode "push", en indiquant la référence de ladite donnée à partager ainsi que l'identifiant dudit deuxième terminal WAP 10'.

Ledit deuxième terminal WAP 10' a reçu ladite demande de chargement automatique de données, comprenant au moins ladite référence de la donnée à partager, et envoie une requête vers le serveur 11 de partage de données.

Le serveur 11 de partage de données a transmis ladite donnée aux dits deuxièmes terminaux WAP 10'. Ladite donnée est alors visualisée par lesdits premier et deuxième terminaux WAP 10, 10', qui peuvent naviguer simultanément.

Selon l'invention, à présent, l'utilisateur dudit premier terminal WAP 10 clique par exemple sur un lien hypertexte existant sur ladite donnée partagée et qui commande une application logicielle.

A titre d'exemple, ladite application logicielle permet l'accès et la visualisation d'un fichier vidéo ou l'audition d'un fichier sonore, le téléchargement d'un fichier de contenu tel qu'un texte ou une image, le lancement de l'installation d'une application Java ou bien toute autre application logicielle commandée à partir d'un navigateur WAP.

Comme ladite donnée est visualisée en mode partagé, une demande de commande d'application est transmise dudit premier terminal WAP 10 vers le serveur 11 de partage de données (étape 1A).

Lors de la mise en oeuvre du partage de données existant, ledit serveur 11 de partage de données a stocké au moins l'identifiant du deuxième terminal WAP 10' avec lequel est réalisé ledit partage de données ou bien de tous les participants audit partage de données.

Si le deuxième terminal WAP 10' commande également la même application logicielle, une demande concernant ladite commande est transmise vers le serveur 11 de partage de données.

Sinon, à la réception de ladite demande de commande d'application en provenance dudit premier terminal WAP 10 (étape 1A), ledit serveur 11 de partage de données envoie une requête vers au moins un serveur 15 de diffusion automatique en mode "push" pour commander au moins une demande de chargement automatique de données, en indiquant l'identifiant dudit deuxième terminal WAP 10' (étape 2B).

Grâce au serveur 11 de partage de données qui stocke les informations se rapportant audit partage de données, la sollicitation des terminaux est réalisée de façon centralisée par ledit serveur 11 de partage. De plus, ne sont uniquement sollicités de façon automatique que les terminaux participants audit partage de données mémorisés par le serveur 11 de partage de données. L'application logicielle est commandée de façon automatique et uniquement vers lesdits premier et deuxième terminaux WAP 10, 10'.

La diffusion automatique de messages en mode "push" permet l'envoie d'un message sans intervention, ni demande du destinataire dudit message. Ladite diffusion automatique en mode "push" est normalisée par l'organisme de normalisation du WAP, soit l'OMA (Open Mobile Alliance).

Selon la nature du réseau de télécommunications sur lequel sont raccordés lesdits terminaux WAP 10, 10', ledit serveur 15 de diffusion automatique en mode "push" peut comprendre plusieurs équipements, tels qu'un équipement d'initiation de push (Push Initiator), un équipement d'interface de push ou "Push Proxy" ou tout autre équipement.

Le serveur 15 de diffusion automatique en mode "push" envoie vers ledit deuxième terminal WAP 10' une requête en mode "push", qui inclut au moins une demande de chargement automatique de données (étape 3B).

Ladite demande de chargement automatique de données inclut également l'adresse du serveur 11 de partage de données, qui a sollicité le serveur 15 de diffusion automatique en mode "push".

De façon automatique, ledit deuxième terminal WAP 10' envoie une requête vers le serveur 11 de partage de données (étape 4B).

A la réception de la demande de commande d'application, le serveur 11 de partage de données, incluant un dispositif comprenant au moins un moyen pour analyser, analyse ladite demande de commande d'application, en particulier analyse le type d'application logicielle à commander.

En fonction de ladite application logicielle, le serveur 11 de partage de données envoie une requête (étapes 2A et 5B) vers au moins un serveur 12 de fichiers descripteurs pour demander la transmission d'un fichier descripteur correspondant à ladite application logicielle commandée (étapes 3A et 6B).

Ledit serveur 11 de partage de données envoie autant de requêtes qu'il existe de terminaux WAP participants au partage de données.

Selon la nature du réseau de communication qui héberge les données, ledit serveur 12 de fichiers descripteurs peut être inclus physiquement ou non dans ledit serveur 13 de diffusion de données.

Le format du fichier descripteur identifie de façon spécifique chaque application à commander par un navigateur. Par exemple, dans le cas du téléchargement d'une application sur un terminal mobile, le format du fichier descripteur peut être du type [ref OMA]. Pour la visualisation d'un fichier vidéo, le format du fichier descripteur peut être du type [ref PV]. Pour une application Java, le format du fichier descripteur peut être du type [ref JCP], etc...

Un fichier descripteur contient par exemple, et selon la norme, les informations liées à l'exécution d'une application logicielle, telles que la nature du contenu transmis (vidéo, son, image, texte, ...), la localisation du contenu concerné par l'application, la taille du fichier de contenu, ses caractéristiques et l'identification du contenu, la page à afficher en fin d'exécution de l'application, etc...

Le serveur 11 de partage de données, incluant un dispositif comprenant au moins un moyen pour rechercher et pour modifier, recherche dans ledit fichier descripteur la commande qui correspond au lancement d'une nouvelle page après l'exécution de l'application logicielle. Par exemple, pour un téléchargement du type OMA, une nouvelle page est chargée si le champ du fichier descripteur "nextURL" est renseigné.

Le serveur 11 de partage de données modifie ledit fichier descripteur, en particulier l'adresse URL dans le fichier descripteur reçu, de manière à prendre en compte le passage par ledit serveur 11 de partage de données, tout en permettant de retrouver l'adresse initialement reçue correspondant à ladite nouvelle page à lancer après l'exécution de l'application.

Ledit fichier descripteur modifié est transmis par le serveur 11 de partage de données vers lesdits premier et deuxième terminaux WAP 10, 10' (étapes 4A et 7B). Ledit serveur 11 de partage de données sollicite tous les terminaux participants audit partage de données sensiblement en même temps pour commander ladite application logicielle partagée quasiment en temps réel.

A la réception dudit fichier descripteur modifié, lesdits premier et deuxième terminaux 10, 10' établissent chacun une connexion vers au moins un serveur 14 d'exécution d'applications (étapes 5A et 8B) pour accéder aux informations spécifiques à l'application commandée (étapes 6A et 9B).

Ledit serveur 14 d'exécution d'applications permet, par exemple, le téléchargement d'un fichier vidéo ou sonore. Ladite application logicielle est donc commandée sensiblement en temps réel par lesdits premier et deuxième terminaux WAP 10, 10' ou bien par tous les participants audit partage de données.

Après l'exécution de ladite application, chacun des premier et deuxième terminaux 10, 10' envoie une requête vers le serveur 11 de partage de données (étapes 7A et 10B). Ladite requête demande un chargement automatique de données, données inscrites à l'adresse reçue initialement dans le fichier descripteur et modifiée par le serveur 11 de partage de données.

Le serveur 11 de partage de données transmet directement une requête vers au moins un serveur 13 de diffusion de données (étapes 8A et 11B) pour récupérer la nouvelle page, correspondant à l'adresse reçue avant modification et stockée pour permettre le partage de données (étapes 9A et 12B).

Selon la nature du réseau de communication qui héberge les données, ledit serveur 13 de diffusion de données inclut physiquement ou non ledit serveur 12 de fichiers descripteurs.

Ladite nouvelle page reçue est traitée, puis transmise par le serveur 11 de partage de données vers lesdits premier et deuxième terminaux WAP 10, 10' (étapes 10A et 13B) en mode partagé.

Lorsque le fichier descripteur reçu par le serveur 11 de partage ne contient pas de commande de lancement d'une nouvelle page, après l'exécution de l'application logicielle, ledit premier terminal WAP 10 peut interroger le serveur 13 de diffusion de données pour recevoir une donnée, puis actionner une demande de partage de ladite donnée visualisée. Sinon, lesdits premier et deuxième terminaux WAP 10, 10' peuvent revenir sur la page existante avant la commande de l'application logicielle.

Tel que décrit précédemment, à la réception de la demande de commande d'application (étape 1A), le serveur 11 de partage de données analyse le type d'application logicielle à commander. Lorsque par exemple l'application logicielle commandée est un téléchargement HTTP, ledit téléchargement est commandé sans fichier descripteur. C'est le cas lorsqu'un lien hypertexte a un lien direct avec l'application logicielle à commander.

Lorsqu'il constate que l'application est commandée sans fichier descripteur, le serveur 11 de partage de données modifie la demande de commande d'application reçue et envoie vers ledit premier terminal WAP 10 un fichier modifié de re-direction, par exemple (HTTP redirect, status 301), vers ledit serveur 14 d'exécution d'applications (étape 4A).

Ledit premier terminal WAP 10 établit une connexion vers ledit serveur 14 d'exécution d'applications (étape 5A). Les autres étapes se poursuivent comme décrit précédemment.

Comme décrit ci-dessus, si le deuxième terminal WAP 10' commande également ladite application logicielle, une demande concernant ladite commande est transmise vers le serveur 11 de partage de données et traité de la même manière que pour le premier terminal WAP 10.

Sinon, à la réception de la demande de commande d'application en provenance dudit premier terminal WAP 10 (étape 1A), le serveur 11 de partage de données envoie une requête vers ledit serveur 15 de diffusion automatique en mode "push" pour commander au moins une demande de chargement automatique de données, en indiquant l'identifiant dudit deuxième terminal WAP 10' et l'identifiant des données à charger (étape 2B).

Les étapes 3B et 4B se déroulent de la même manière que décrit précédemment. Le serveur 11 de partage de données modifie la demande de commande d'application reçue et envoie vers ledit deuxième terminal WAP 10' un fichier modifié de re-direction vers le serveur 14 d'exécution d'applications (étape 7B).

Ledit deuxième terminal WAP 10' établit une connexion vers ledit serveur 14 d'exécution d'applications (étape 8B). Les autres étapes se poursuivent comme décrit précédemment.

Dans le cas où l'application logicielle correspondrait par exemple à un service privé ou payant, lorsque ledit premier terminal WAP 10 envoie une demande de commande d'application (étape 1A), selon paramétrage, le serveur 11 de partage de données peut commander ledit serveur 15 de diffusion automatique en mode "push" vers ledit deuxième terminal WAP 10' pour transmettre une page de demande de confirmation de manière à demander un accord pour l'exécution de ladite application logicielle.

Si ledit deuxième terminal WAP 10' donne son accord, le procédé conforme à l'invention se poursuit comme décrit précédemment par les étapes 2A et 2B.

Lors de la réception d'un refus de commande de ladite application logicielle par un terminal 10' sollicité, selon le paramétrage sélectionné, le serveur 11 de partage de données peut envoyer une page d'attente prédéfinie vers ledit deuxième terminal WAP 10', compte tenu de la non-confirmation.

Du fait que le partage de données peut avoir lieu avec plusieurs utilisateurs distants, en plus desdits premier et deuxième terminaux WAP 10, 10', certains terminaux peuvent ne pas être compatibles avec l'exécution de ladite application logicielle partagée.

Le serveur 11 de partage de données a stocké la liste des terminaux participants au partage de données. Lorsque ces terminaux correspondent à des abonnés gérés par lui, le serveur 11 de partage de données peut avoir stocké les capacités desdits terminaux et leurs caractéristiques techniques.

Les caractéristiques techniques des terminaux participants au partage de données peuvent également être transmises lors de l'échanges des requêtes avec ledit serveur 11 de partage de données. Sinon, ledit serveur 11 de partage de données peut interroger au moins un serveur de capacité de terminaux pour connaître lesdites caractéristiques techniques.

Lorsque ledit premier terminal WAP 10 envoie une demande de commande d'application, le serveur 11 de partage de données, incluant un dispositif comprenant au moins un moyen pour vérifier, vérifie les capacités des terminaux participants audit partage.

Selon le paramétrage sélectionné, le serveur 11 de partage de données commande le serveur 15 de diffusion automatique en mode "push" vers ledit deuxième terminal WAP 10' pour transmettre une page d'attente prédéfinie informant l'utilisateur que le terminal en question n'a pas la possibilité d'accéder à l'application demandée du fait de la non-compatibilité. Selon un autre paramétrage, le serveur 11 de partage de données ne commande pas ledit serveur 15 de diffusion automatique en mode "push" vers ledit deuxième terminal WAP 10', qui reste sur la donnée précédemment partagée.

Tel que le montre la description ci-dessus, le serveur 11 de partage de données sert d'intermédiaire entre lesdits premier et deuxième terminaux WAP. Sans la gestion par le serveur 11 de partage de données, seul ledit premier terminal WAP 10 exécute ladite application logicielle.

Ledit serveur 11 de partage de données permet l'exécution de l'application logicielle sur tous les terminaux distants 10, 10' en mode partagé.

Lorsque le lien hypertexte permet l'accès et la visualisation d'un fichier de contenu, tels qu'un fichier vidéo ou sonore, les différents utilisateurs participants audit partage ont tous accès aux même contenus.

Grâce au moyen logiciel prévu tel qu'un programme d'ordinateur, le serveur 11 de partage de données reçoit ladite demande de commande d'application logicielle en provenance dudit premier terminal WAP 10, analyse le type d'application logicielle commandée, modifie au moins un fichier pour tenir compte de son intermédiaire et transmet ledit fichier modifié vers lesdits premier et deuxième terminaux WAP 10, 10'.

Si nécessaire, ledit moyen logiciel commande la transmission d'une page de demande de confirmation pour demander un accord vers le deuxième terminal WAP 10' pour l'exécution de ladite application logicielle. Ledit moyen logiciel peut commander la transmission d'une page d'attente prédéfinie en cas de non-confirmation pour l'exécution de ladite application logicielle.

Si nécessaire, ledit moyen logiciel vérifie la compatibilité desdits premier et deuxième terminaux WAP 10, 10' avec l'exécution de ladite application logicielle. Ledit moyen logiciel peut commander la transmission d'une page d'attente prédéfinie en cas de non-compatibilité avec l'exécution de ladite application logicielle.

## Revendications

1. Système de commande d'au moins une application logicielle à partir d'au moins un premier terminal WAP (10), visualisant en mode partagé au moins une donnée située dans au moins un réseau de communication, avec au moins un deuxième terminal WAP (10'), le système mettant en oeuvre au moins une fonction de diffusion automatique en mode "push" vers le deuxième terminal (10'), ledit système comprenant au moins un serveur (11) de partage de données apte à analyser au moins une demande de commande d'application logicielle et à transmettre au moins un fichier modifié selon le type d'application logicielle, application commandée avec ou sans fichier descripteur, vers lesdits premier et deuxième terminaux WAP (10, 10') pour exécuter ladite application logicielle en mode partagé.

2. Système de commande d'une application selon la revendication 1, **caractérisé en ce que** ledit serveur (11) de partage de données, après analyse du type d'application logicielle, est apte à demander à au moins un serveur (12) de fichiers descripteurs la transmission d'au moins un fichier descripteur de l'application logicielle pour exécuter ladite application logicielle après modification dudit fichier descripteur.

3. Système de commande d'une application selon la revendication 1, **caractérisé en ce que** ledit serveur (11) de partage de données, pour une application commandée sans fichier descripteur, est apte à transmettre vers ledit premier terminal WAP (10) un fichier de re-direction pour exécuter ladite application logicielle après modification de ladite demande de commande d'application.

4. Système de commande d'une application selon l'une quelconque des revendications 1 à 3, **caractérisé en ce que** ledit serveur (11) de partage de données est apte à dialoguer avec au moins un serveur (15) de diffusion automatique en mode "push" pour commander ladite application partagée par lesdits premier et deuxième terminal WAP (10, 10').

5. Système de commande d'une application selon l'une quelconque des revendications 1 à 4, **caractérisé en ce que** ledit système est apte à commander ladite application partagée sensiblement en temps réel pour lesdits premier et deuxième terminaux WAP (10, 10').

6. Système de commande d'une application selon l'une quelconque des revendications 1 à 5, **caractérisé en ce que** ledit système est apte à commander ladite application partagée de façon automatique et uniquement vers lesdits premier et deuxième terminaux (10, 10') participants au mode partagé.

7. Serveur (11) de partage de données utilisable dans un système de commande d'application selon l'une quelconque des revendications 1 à 6, tel qu'il est apte à analyser au moins une demande de commande d'application logicielle et à transmettre au moins un fichier modifié selon le type d'application logicielle, application commandée avec ou sans fichier descripteur, vers des premier et deuxième terminaux WAP (10, 10') pour exécuter ladite application logicielle en mode partagé.

8. Serveur (11) de partage de données selon la revendication 7, **caractérisé en ce qu'**il comprend au moins un dispositif comprenant au moins un moyen pour analyser au moins un type d'application logicielle, un moyen pour modifier au moins un fichier reçu et un moyen pour vérifier les capacités desdits premier et deuxième terminaux WAP (10, 10').

9. Procédé de commande d'au moins une application logicielle à partir d'au moins un premier terminal WAP (10), visualisant en mode partagé au moins une donnée située dans au moins un réseau de communication, avec au moins un deuxième terminal WAP (10'), le système mettant en oeuvre au moins une fonction de diffusion automatique en mode "push" vers le deuxième terminal (10'), ledit procédé comportant les étapes consistant à :
- transmettre au moins une demande de commande d'application logicielle dudit premier terminal WAP (10) vers au moins un serveur (11) de partage de données,
- analyser le type d'application logicielle par ledit serveur (11) de partage de données, application commandée avec ou sans fichier descripteur,
- modifier au moins un fichier et transmettre ledit fichier modifié selon le type d'application logicielle vers lesdits premier et deuxième terminaux WAP (10, 10'),
- établir une connexion à partir desdits premier et deuxième terminaux WAP (10, 10') vers au moins un serveur (14) d'exécution d'applications.

10. Procédé de commande d'une application, selon la revendication 9, **caractérisé en ce que** ledit serveur (11) de partage de données commande au moins un serveur (15) de diffusion automatique en mode "push" pour transmettre une page de demande de confirmation vers ledit deuxième terminal WAP (10') pour demander un accord pour l'exécution de ladite application logicielle.

11. Procédé de commande d'une application, selon la revendication 10, **caractérisé en ce que** ledit serveur (11) de partage de données envoie une page d'attente prédéfinie vers ledit deuxième terminal WAP (10') dans le cas de non-confirmation pour l'exécution de ladite application logicielle.

12. Procédé de commande d'une application, selon l'une quelconque des revendications 9 à 11, **caractérisé en ce que** ledit serveur (11) de partage de données vérifie la compatibilité desdits premier et deuxième terminaux WAP (10, 10') avec l'exécution de ladite application logicielle partagée.

13. Procédé de commande d'une application, selon la revendication 12, **caractérisé en ce que** ledit serveur (11) de partage de données commande ledit serveur (15) de diffusion automatique en mode "push" vers ledit deuxième terminal WAP (10') pour transmettre une page d'attente prédéfinie en cas de non-compatibilité avec l'exécution de ladite application logicielle.

14. Programme d'ordinateur comprenant des lignes d'instructions pour exécuter les étapes suivantes lors d'une commande d'au moins une application logicielle à partir d'au moins un premier terminal WAP (10) :
- recevoir au moins une demande de commande d'application logicielle en provenance dudit premier terminal WAP (10),
- analyser le type d'application logicielle, application commandée avec ou sans fichier descripteur,
- modifier au moins un fichier et transmettre ledit fichier modifié selon le type d'application logicielle vers lesdits premier et deuxième terminaux WAP (10, 10').

## Claims

1. System for launching at least one software application from at least one first WAP terminal (10), displaying in shared mode at least one data item, situated in at least one communication network, with at least one second WAP terminal (10'), the system implementing at least one function of automatic broadcasting in "push" mode to the second terminal (10'), the said system comprising at least one data sharing server (11) adapted to analyse at least one software application launch request and to transmit at least one file modified according to the type of software application, application launched with or without descriptor file, to the said first and second WAP terminals (10, 10') so as to execute the said software application in shared mode.

2. System for launching an application according to Claim 1, **characterized in that** the said data sharing server (11), after analysis of the type of software application, is adapted to request from at least one server (12) of descriptor files the transmission of at least one descriptor file of the software application so as to execute the said software application after modification of the said descriptor file.

3. System for launching an application according to Claim 1, **characterized in that** the said data sharing server (11), for an application launched without descriptor file, is adapted to transmit a redirection file to the said first WAP terminal (10) so as to execute the said software application after modification of the said application launch request.

4. System for launching an application according to any one of Claims 1 to 3, **characterized in that** the said data sharing server (11) is adapted to dialogue with at least one server (15) for automatic broadcasting in "push" mode so as to launch the said application shared by the said first and second WAP terminals (10, 10').

5. System for launching an application according to any one of Claims 1 to 4, **characterized in that** the said system is adapted to launch the said shared application substantially in real time for the said first and second WAP terminals (10, 10').

6. System for launching an application according to any one of Claims 1 to 5, **characterized in that** the said system is adapted to launch the said shared application in an automatic manner and solely to the said first and second terminals (10, 10') that are participating in the shared mode.

7. Data sharing server (11) usable in a system for launching an application according to any one of claims 1 to 6, **characterized in that** it is adapted to analyse at least one software application launch request and to transmit at least one file modified according to the type of software application, application launched with or without descriptor file, to first and second WAP terminals (10, 10') so as to execute the said software application in shared mode.

8. Data sharing server (11) according to Claim 7, **characterized in that** it comprises at least one device comprising at least one means for analysing at least one type of software application, a means for modifying at least one file received and a means for verifying the capabilities of the said first and second WAP terminals (10, 10').

9. Method for launching at least one software application from at least one first WAP terminal (10), displaying in shared mode at least one data item, situated in at least one communication network, with at least one second WAP terminal (10'), the system implementing at least one function of automatic broadcasting in "push" mode to the second terminal (10'), the said method comprising the steps consisting in:
- transmitting at least one software application launch request from the said first WAP terminal (10) to at least one data sharing server (11),
- analysing the type of software application by the said data sharing server (11), application launched with or without descriptor file,
- modifying at least one file and transmitting the said file modified according to the type of software application to the said first and second WAP terminals (10, 10'),
- establishing a connection from the said first and second WAP terminals (10, 10') to at least one applications execution server (14).

10. Method for launching an application, according to Claim 9, **characterized in that** the said data sharing server (11) launches at least one server (15) for automatic broadcasting in "push" mode for transmitting a confirmation request page to the said second WAP terminal (10') so as to request an agreement for the execution of the said software application.

11. Method for launching an application, according to Claim 10, **characterized in that** the said data sharing server (11) dispatches a predefined standby page to the said second WAP terminal (10') in the case of non-confirmation for the execution of the said software application.

12. Method for launching an application, according to any one of Claims 9 to 11, **characterized in that** the said data sharing server (11) verifies the compatibility of the said first and second WAP terminals (10, 10') with the execution of the said shared software application.

13. Method for launching an application, according to Claim 12, **characterized in that** the said data sharing server (11) launches the said server (15) for automatic broadcasting in "push" mode to the said second WAP terminal (10') so as to transmit a predefined standby page in case of non-compatibility with the execution of the said software application.

14. Computer program comprising instruction lines for executing the following steps during a launch of at least one software application from at least one first WAP terminal (10):
- receiving at least one software application launch request originating from the said first WAP terminal (10),
- analysing the type of software application, application launched with or without descriptor file,
- modifying at least one file and transmitting the said file modified according to the type of software application to the said first and second WAP terminals (10, 10').

## Patentansprüche

1. System zum Abruf mindestens einer Softwareanwendung ausgehend von mindestens einem ersten WAP-Terminal (10), das im gemeinsam genutzten Modus mindestens einen Datenwert anzeigt, der sich in mindesten einem Kommunikationsnetz befindet, mit mindestens einem zweiten WAP-Terminal (10'), wobei das System mindestens eine Funktion der automatischen Aussendung im "Push"-Modus zum zweiten WAP-Terminal (10') anwendet, wobei das System mindestens einen Server (11) der gemeinsamen Datennutzung aufweist, der ausgelegt ist, um mindestens eine Softwareanwendung-Abrufanfrage zu analysieren und mindestens eine entsprechend dem Typ der Softwareanwendung, einer mit oder ohne Deskriptordatei abgerufenen Anwendung, veränderte Datei zu dem ersten und zweiten WAP-Terminal (10, 10') zu übertragen, um die Softwareanwendung im gemeinsam genutzten Modus auszuführen.

2. System zum Abruf einer Anwendung nach Anspruch 1, **dadurch gekennzeichnet, dass** der Server (11) der gemeinsamen Datennutzung nach der Analyse des Typs der Softwareanwendung ausgelegt ist, um von mindestens einem Server (12) von Deskriptordateien die Übertragung mindestens einer Deskriptordatei der Softwareanwendung anzufordern, um die Softwareanwendung nach der Veränderung der Deskriptordatei auszuführen.

3. System zum Abruf einer Anwendung nach Anspruch 1, **dadurch gekennzeichnet, dass** der Server (11) der gemeinsamen Datennutzung für eine ohne Deskriptordatei abgerufene Anwendung ausgelegt ist, um zum ersten WAP-Terminal (10) eine Neuausrichtungsdatei zu übertragen, um die Softwareanwendung nach Änderung der Anwendungsabrufanfrage auszuführen.

4. System zum Abruf einer Anwendung nach einem der Ansprüche 1 bis 3, **dadurch gekennzeichnet, dass** der Server (11) der gemeinsamen Datennutzung ausgelegt ist, um mit mindestens einem Server (15) der automatischen Aussendung im "Push"-Modus zu dialogisieren, um die vom ersten und zweiten WAP-Terminal (10, 10') gemeinsam genutzte Anwendung abzurufen.

5. System zum Abruf einer Anwendung nach einem der Ansprüche 1 bis 4, **dadurch gekennzeichnet, dass** das System ausgelegt ist, um die gemeinsam genutzte Anwendung für das erste und das zweite WAP-Terminal (10, 10') im Wesentlichen in Echtzeit abzurufen.

6. System zum Abruf einer Anwendung nach einem der Ansprüche 1 bis 5, **dadurch gekennzeichnet, dass** das System ausgelegt ist, um die gemeinsam genutzte Anwendung automatisch und nur zu dem ersten und dem zweiten Terminal (10, 10') abzurufen, die am gemeinsam genutzten Modus teilnehmen.

7. Server (11) der gemeinsamen Datennutzung, der in einem Anwendungsabrufsystem nach einem der Ansprüche 1 bis 6 verwendet werden kann und ausgelegt ist, um mindestens eine Softwareanwendung-Abrufanfrage zu analysieren und mindestens eine gemäß dem Typ der Softwareanwendung, Anwendung mit oder ohne Deskriptordatei, veränderte Datei zu einem ersten und einem zweiten WAP-Terminal (10, 10') zu übertragen, um die Softwareanwendung im gemeinsam genutzten Modus auszuführen.

8. Server (11) der gemeinsamen Datennutzung nach Anspruch 7, **dadurch gekennzeichnet, dass** er mindestens eine Vorrichtung aufweist, die mindestens ein Mittel, um mindestens einen Typ einer Softwareanwendung zu analysieren, ein Mittel, um mindestens eine empfangene Datei zu verändern, und ein Mittel umfasst, um die Kapazitäten des ersten und des zweiten WAP-Terminals (10, 10') zu überprüfen.

9. Verfahren zum Abruf mindestens einer Softwareanwendung ausgehend von mindestens einem ersten WAP-Terminal (10), das im gemeinsam genutzten Modus mindestens einen Datenwert anzeigt, der sich in mindestens einem Kommunikationsnetz befindet, mit mindestens einem zweiten WAP-Terminal (10'), wobei das System mindestens eine Funktion der automatischen Aussendung im "Push"-Modus zum zweiten Terminal (10') verwendet, und wobei das Verfahren die Schritte aufweist, die darin bestehen:
- mindestens eine Softwareanwendung-Abrufanfrage des ersten WAP-Terminals (10) zu mindestens einem Server (11) der gemeinsamen Datennutzung zu übertragen,
- den Typ der Softwareanwendung durch den Server (11) der gemeinsamen Datennutzung zu analysieren, einer mit oder ohne Deskriptordatei abgerufenen Anwendung,
- mindestens eine Datei zu verändern und die veränderte Datei je nach dem Typ der Softwareanwendung an das erste und das zweite WAP-Terminal (10, 10') zu übertragen,
- eine Verbindung ausgehend von dem ersten und dem zweiten WAP-Terminal (10, 10') zu mindestens einem Server (14) der Ausführung von Anwendungen aufzubauen.

10. Verfahren zum Abrufen einer Anwendung nach Anspruch 9, **dadurch gekennzeichnet, dass** der Server (11) der gemeinsamen Datennutzung mindestens einen Server (15) der automatischen Aussendung im "Push"-Modus steuert, um eine Bestätigungsanfrageseite an das zweite WAP-Terminal (10') zu übertragen, um eine Zustimmung zur Ausführung der Softwareanwendung anzufordern.

11. Verfahren zum Abrufen einer Anwendung nach Anspruch 10, **dadurch gekennzeichnet, dass** der Server (11) der gemeinsamen Datennutzung im Fall einer Nicht-Bestätigung der Ausführung der Softwareanwendung eine vordefinierte Warteseite an das zweite WAP-Terminal (10') schickt.

12. Verfahren zum Abrufen einer Anwendung nach einem der Ansprüche 9 bis 11, **dadurch gekennzeichnet, dass** der Server (11) der gemeinsamen Datennutzung die Kompatibilität des ersten und des zweiten WAP-Terminals (10, 10') mit der Ausführung der gemeinsam genutzten Softwareanwendung überprüft.

13. Verfahren zum Abrufen einer Anwendung nach Anspruch 12, **dadurch gekennzeichnet, dass** der Server (11) der gemeinsamen Datennutzung den Server (15) der automatischen Aussendung im "Push"-Modus zum zweiten WAP-Terminal (10') steuert, um im Fall einer Nicht-Kompatibilität mit der Ausführung der Softwareanwendung eine vordefinierte Warteseite zu übertragen.

14. Computerprogramm, das Befehlszeilen aufweist, um bei einem Abruf mindestens einer Softwareanwendung ausgehend von mindestens einem ersten WAP-Terminal (10) die folgenden Schritte auszuführen:
- Empfang mindestens einer vom ersten WAP-Terminal (10) kommenden Softwareanwendung-Abrufanfrage,
- Analyse des Typs der Softwareanwendung, einer mit oder ohne Deskriptordatei abgerufenen Anwendung,
- Veränderung mindestens einer Datei und Übertragung der veränderten Datei je nach dem Typ der Softwareanwendung an das erste und das zweite WAP-Terminal (10, 10').
